# EUROPEAN PATENT APPLICATION

(11) **EP 4 470 386 A1**
(43) Date of publication of application: **04.12.2024**
(21) Application number: 23746968.9
(22) Date of filing: 25.01.2023
(51) Int. Cl.: A23D 7/005, A23D 7/02

(54) **HIGH OIL CONTENT OIL-IN-WATER TYPE EMULSIFIED OIL-AND-FAT COMPOSITION**

(30) Priority: 26.01.2022 JP 2022009934
(71) Applicant: Fuji Oil Holdings Inc., Izumisano-shi, Osaka 598-8540 (JP)
(72) Inventor: JACUTPRAKART, Sombol, Izumisano-shi, Osaka 598-8540 (JP); YOSHIKAWA, Shinichi, Izumisano-shi, Osaka 598-8540 (JP); KANO, Hiroshi, Izumisano-shi, Osaka 598-8540 (JP); INOUE, Ryota, Izumisano-shi, Osaka 598-8540 (JP); UEYAMA, Tomoki, Izumisano-shi, Osaka 598-8540 (JP)
(74) Representative: Boult Wade Tennant LLP
(86) International application number: PCT/JP2023/002192
(87) International publication number: WO 2023/145757

(57) **Abstract**

Provided is an oil-in-water oil and/or fat emulsion composition containing water, a protein, and an oil and/or fat, wherein an amount of the oil and/or fat is 50 mass% or more when a total amount of water, the protein, and the oil and/or fat in the oil and/or fat emulsion composition is 100 mass%, a compressive load of the oil and/or fat emulsion composition measured at 25°C is 2.0 N or more, and 50 mass% or more in a protein material related to the protein is derived from a plant protein material having all characteristics of a) to c) below: a) a protein content in a solid content is 70 mass% or more; b) an NSI is 80 or more; and c) an area ratio of 2000 Da or more and less than 20000 Da is 30% or more and an area ratio of 20000 Da or more is 70% or less in a measurement result of molecular weight distribution.

## Description

### Technical Field

### Related Application

This application claims the benefit of priority of JP 2022-009934 filed with the Japan Patent Office on January 26, 2022. The priority application is incorporated herein by reference in its entirety.

The present invention relates to a high oil content oil-in-water oil and/or fat emulsion composition and a solid fat substitute oil and/or fat composition prepared from the oil and/or fat emulsion composition.

### Background Art

Oils and/or fats have a function of enhancing the flavor and body taste of foods including beverages, and oils and/or fats have been used in the production of foods in the art. In addition, in view of the flavor and texture, an oil and/or fat is also often used as an oil-in-water emulsion, for example, a water-in-oil emulsion, such as margarine, or an oil-in-water emulsion, such as mayonnaise, rather than as an oil and/or fat itself. In particular, oil-in-water emulsions can reduce the heaviness peculiar to oils and/or fats while imparting a body taste and thus are suitably used in various applications, such as mayonnaise, whipped cream, and pickling liquid.

However, oil-in-water emulsions are those in which an oil and/or fat is dispersed in an aqueous phase, and trying to increase the oil content is likely to cause phase inversion and/or demulsification. This usually makes it difficult to contain more oil and/or fat than the aqueous phase portion, that is, 50% or more of oil and/or fat in the emulsion. For this reason, a large amount of an oil-in-water emulsion is required to be added to further impart a body taste, causing problems, such as an increase in cost and a limitation in the degree of freedom in blending.

Mayonnaise is known as a high oil content oil-in-water emulsion in the art but requires as an essential ingredient a phospholipid in egg yolk, which is an animal raw material. Patent Literature 1 is a technique relating to a high oil content oil-in-water emulsion, which requires as essential ingredients a fermented cellulose complex and an emulsifier, such as lysolecithin and a polyglycerol fatty acid ester.

On the other hand, in recent years, there has been a tendency for consumers to avoid animal raw materials and avoid additives due to religious restrictions, allergy problems, increased safety orientation, and the like. However, it is difficult to contain 50% or more of oil and/or fat in an emulsion without a phospholipid or an additive; for example, Patent Literature 2 discloses an emulsion composition containing a plant protein material, but good results are obtained only up to a lipid amount of 15% in the emulsion composition. In Patent Literature 2, the emulsion composition containing a lipid in an amount of more than 30% resulted in poor evaluation, and the lipid amount was finally examined only up to 40%. Thus, there is a demand for a technique for preparing a high oil content oil-in-water emulsion using a plant raw material that is not an additive.

In addition, in recent years, excessive intake of trans acids and saturated fatty acids has been said to increase the risk of heart disease, such as arteriosclerosis, and shift to low trans acids and low saturated fatty acids has become mainstream. These fatty acids are contained in relatively large amounts in oils and/or fats that are solid at normal temperature (solid fats), and thus attempts have been made to replace such a solid fat with an oil and/or fat that is liquid at normal temperature (liquid oil). One of the attempts studied is a technique of "oleogelation", in which a liquid oil is contained in a network formed by a small amount of solid particles to be in a solidified state (Non-Patent Literature 1). Non-Patent Literature 1 exemplifies a method in which an oil-in-water emulsion is prepared using a protein as an emulsifying medium, and the emulsion is dried to increase the oil content and perform oleogelation.

### Citation List

### Patent Literature

Patent Literature 1: JP 2015-02682 A
Patent Literature 2: WO 2019/189810

### Non-Patent Literatures

Non-Patent Literature 1: Feichtinger, A.; Scholten, E., Foods 2020, 9, 1745.

### Summary of Invention

### Technical Problem

An object of the present invention is to provide a high oil content oil-in-water oil and/or fat emulsion composition. Another object of the present invention is to provide an oil and/or fat composition as an alternative to a solid fat. In addition, for example, in the technique of Non-Patent Literature 1, a structural change of a protein occurring in a drying process causes leakage of a liquid oil, that is, an oil-off phenomenon. Thus, still another object of the present invention is to provide a high oil content oil-in-water emulsion composition having what is called heat resistance, that is, causing little oil-off during drying treatment, such as heating.

### Solution to Problem

As a result of diligent studies to achieve the above objects, the present inventors have found that use of a protein material with a certain molecular weight distribution and properties can provide an oil-in-water oil and/or fat emulsion composition having a high oil content causing little oil-off during drying, and have completed the present invention.

That is, the present invention provides:
(1) an oil-in-water oil and/or fat emulsion composition containing water, a protein, and an oil and/or fat, in which
   an amount of the oil and/or fat is 50 mass% or more when a total amount of water, the protein, and the oil and/or fat in the oil and/or fat emulsion composition is 100 mass%,
   a compressive load of the oil and/or fat emulsion composition measured at 25°C is 2.0 N or more, and
   50 mass% or more in a protein material related to the protein is derived from a plant protein material having all characteristics of a) to c) below:
      a) a protein content in a solid content is 70 mass% or more,
      b) an NSI is 80 or more, and
      c) an area ratio of 2000 Da or more and less than 20000 Da is 30% or more and an area ratio of 20000 Da or more is 70% or less in a measurement result of molecular weight distribution;
(2) the oil and/or fat emulsion composition according to (1), in which the plant protein material has an area ratio of 2000 Da or more and less than 20000 Da of 45 to 90% in a measurement result of molecular weight distribution;
(3) the oil and/or fat emulsion composition according to (2), in which an area ratio of less than 2000 Da is 45% or less in a measurement result of molecular weight distribution;
(4) the oil and/or fat emulsion composition according to any of (1) to (3), in which the compressive load is 4.0 N or more;
(5) the oil and/or fat emulsion composition according to any of (1) to (3), in which the amount of the oil and/or fat is 75% or more when the total amount of water, the protein, and the oil and/or fat in the oil and/or fat emulsion composition is 100 mass%;
(6) the oil and/or fat emulsion composition according to any of (1) to (3), in which the plant protein material is derived from a legume;
(7) the oil and/or fat emulsion composition according to any of (1) to (3), containing no animal protein;
(8) the oil and/or fat emulsion composition according to any of (1) to (3), in which
   the compressive load is 4.0 N or more,
   the amount of the oil and/or fat is 75% or more when the total amount of water, the protein, and the oil and/or fat in the oil and/or fat emulsion composition is 100 mass%,
   the plant protein material is derived from a legume, and
   the oil and/or fat emulsion composition contains no animal protein;
(9) a solid fat substitute oil and/or fat composition produced by drying the oil and/or fat emulsion composition described in any of (1) to (3);
(10) a solid fat substitute oil and/or fat composition produced by drying the oil and/or fat emulsion composition described in (4).
(11) a solid fat substitute oil and/or fat composition produced by drying the oil and/or fat emulsion composition described in (5);
(12) a solid fat substitute oil and/or fat composition produced by drying the oil and/or fat emulsion composition described in (6);
(13) a solid fat substitute oil and/or fat composition produced by drying the oil and/or fat emulsion composition described in (7); and
(14) a solid fat substitute oil and/or fat composition produced by drying the oil and/or fat emulsion composition described in (8).

### Advantageous Effects of Invention

According to the present invention, there can be provided an oil-in-water oil and/or fat emulsion composition with high oil content. More specifically, according to the present invention, there can be provided an oil-in-water oil and/or fat emulsion composition with high oil content causing little oil-off during drying. In an example, according to the present invention, there can be provided an oil and/or fat emulsion composition in which no animal raw material is used. In another example, according to the present invention, there can be provided an oil and/or fat emulsion composition in which an additive, such as an emulsifier, is not used. In addition, in another embodiment, use of the oil and/or fat emulsion composition of the present invention can provide a solid fat substitute oil and/or fat composition. Furthermore, in another embodiment, there can be provided a solid fat substitute oil and/or fat composition in which no animal raw material is used. Moreover, in another example, there can be provided a solid fat substitute oil and/or fat composition in which an additive, such as an emulsifier, is not used.

### Brief Description of Drawings

FIG. 1 is photos showing results of Example 2. A to E show results of samples A to E, respectively.
FIG. 2 is photos showing a solid fat substitute oil and/or fat composition prepared in Example 6.
FIG. 3 is photos showing a state in which the solid fat substitute oil and/or fat composition prepared in Example 6 was heated in a frying pan.
FIG. 4 is a photo showing results of Example 7.

### Description of Embodiments

A high oil content oil-in-water oil and/or fat emulsion composition of an aspect of the present invention is an oil-in-water oil and/or fat emulsion composition containing water, a protein, and an oil and/or fat, in which
an amount of the oil and/or fat is 50 mass% or more when a total amount of water, the protein, and the oil and/or fat in the oil and/or fat emulsion composition is 100 mass%,
a compressive load of the oil and/or fat emulsion composition measured at 25°C is 2.0 N or more, and
50 mass% or more in the protein is derived from a plant protein material having all characteristics of a) to c) below:
   a) a protein content in a solid content is 70 mass% or more,
   b) an NSI is 80 or more, and
   c) an area ratio of 2000 Da or more and less than 20000 Da is 30% or more and an area ratio of 20000 Da or more is 70% or less in a measurement result of molecular weight distribution.

### Oil and/or Fat Emulsion Composition

In one aspect, the present invention provides an oil-in-water oil and/or fat emulsion composition containing water, a protein, and an oil and/or fat.

When a total amount of water, the protein, and the oil and/or fat in the oil and/or fat emulsion composition of the present aspect is 100 mass%, the amount of the oil and/or fat is 50 mass% or more, and examples include amounts of 55 mass% or more, 60 mass% or more, 65 mass% or more, 70 mass% or more, 75 mass% or more, 80 mass% or more, and 85 mass% or more. The upper limit of the oil and/or fat content is not particularly limited, but examples include contents of 99 mass% or less, 95 mass% or less, and 90 mass% or less. More specific examples of the oil and/or fat content include, for example, contents of 50 to 99 mass%, of 60 to 95 mass%, and of 70 to 90 mass%. The amount of the protein is not particularly limited, but the lower limit can be 1.2 mass%, 1.5 mass%, 1.7 mass%, 2 mass%, 2.4 mass%, 3 mass%, 3.2 mass%, 3.6 mass%, 4 mass%, 5 mass%, 10 mass%, or 15 mass%, and the upper limit can be 50 mass%, 45 mass%, 40 mass%, 35 mass%, 30 mass%, 25 mass%, or 20 mass%. More specific examples of the protein amount include, for example, amounts of 1 .2 to 50 mass%, of 2 to 40 mass%, and of 10 to 30 mass%.

A compressive load of the oil and/or fat emulsion composition measured at 25°C of the present aspect is 2.0 N or more, and examples include compressive loads of 2.5 N or more, 3.0 N or more, 3.5 N or more, 4.0 N or more, 4.5 N or more, 5.0 N or more, 10.0 N or more, 20.0 N or more, 30.0 N or more, and 40.0 N or more. The upper limit of the compressive load is not particularly limited, but examples include compressive loads of 99.0 N or less, 90.0 N or less, 85.0 N or less, 80.0 N or less, 75.0 N or less, 70.0 N or less, 60.0 N or less, and 50.0 N or less. More specific examples of the compressive load include, for example, compressive loads of 2.0 to 99.0 N, of 5.0 to 75.0 N, and of 20.0 to 60.0 N. That is, the oil and/or fat emulsion composition of the present aspect has a certain degree of viscoelasticity and has properties of a paste form, a mayonnaise form, a gel form, a semi-solid form, a solid form, or the like. A method for measuring the compressive load will be described later.

In an embodiment, the oil and/or fat emulsion composition of the present aspect has heat resistance and exhibits an oil-off rate of 40% or less, for example, 30% or less, 20% or less, or 10% or less in an evaluation test for oil-off described later. More specific examples of the oil-off rate include, for example, oil-off rates of 0 to 40%, of 1 to 30%, and of 2.5 to 20%.

### Plant Protein Material

In the present specification, the concept of the "plant protein material" is a food material that contains a plant protein as a main component and is used as a raw material for various processed foods and beverages. Examples of the plant protein material include legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat and the like, and rice; vegetables; and fruits. In a more specific embodiment, the plant protein material is prepared from legume protein. In an even more specific embodiment, the plant protein material is prepared from soybean protein, pea protein, mung bean protein, or broad bean protein. In a still more specific embodiment, the plant protein material is prepared from soybean protein or pea protein. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

In an embodiment, 50 mass% or more of the protein contained in the oil and/or fat emulsion composition of the present aspect is a plant protein, more preferably 55 mass% or more, 60 mass% or more, 65 mass% or more, 70 mass% or more, 75 mass% or more, 80 mass% or more, 85 mass% or more, 90 mass% or more, 95 mass% or more, or 97 mass% or more can be a plant protein, and most preferably 100 mass% is a plant protein, that is, preferably any animal protein, such as milk protein, is not contained at all. This further enhances the substitution effect of a plant protein for an animal protein. In a certain embodiment, at least milk protein is preferably not contained. In a more specific embodiment, 50 mass% or more of the protein contained in the oil and/or fat emulsion composition of the present aspect is a plant protein material described below, more preferably 55 mass% or more, 60 mass% or more, 65 mass% or more, 70 mass% or more, 75 mass% or more, 80 mass% or more, 85 mass% or more, 90 mass% or more, 95 mass% or more, or 97 mass% or more can be a plant protein, and most preferably 100 mass% is a plant protein material.

The plant protein material used in the oil and/or fat emulsion composition of the present aspect has the following properties.

### a) Protein Purity

The plant protein material used in the oil and/or fat emulsion composition of the present aspect has a protein content of 70 mass% or more, for example, 80 mass% or more, 85 mass% or more, or 90 mass% or more, in a solid content. A raw material for the plant protein material included in the above range is preferably a protein isolate; for example, in the case of preparing the oil and/or fat emulsion composition from a protein material derived from soybean, examples of the raw material include a soybean protein isolate.

### b) NSI of Protein

The specific plant protein material used in the oil and/or fat emulsion composition of the present aspect has a nitrogen solubility index (NSI) of 80 or more. The NSI is used as an index of protein solubility. More preferably, the plant protein material with an NSI of 85 or more, 90 or more, 95 or more, or 97 or more can be used. For example, a plant protein material with a high NSI preferably used is a plant protein material that is not subjected to a treatment for insolubilizing protein, such as an enzymatic degradation treatment or a mineral addition treatment, or a plant protein material that is subjected to such a treatment but only to a small extent.

A high NSI of the plant protein material indicates high dispersibility in water and can contribute to dispersion stability of the oil and/or fat emulsion composition of the present aspect. The plant protein material with too low an NSI would tend to cause precipitation, which is not preferred.

The NSI is expressed as a proportion (mass%) of water-soluble nitrogen (crude protein) to the total nitrogen content based on a method described later. In the present invention, the NSI is a value measured in accordance with a method described later.

### c) Molecular Weight Distribution

The plant protein material used in the oil and/or fat emulsion composition of the present aspect has an area ratio of 30% or more for 2000 Da or more and less than 20000 Da and 70% or less for 20000 Da or more in molecular weight distribution when the molecular weight is measured by gel filtration. In a specific embodiment, the area ratio is 35% or more for 2000 Da or more and less than 20000 Da and 65% or less for 20000 Da or more.

In a certain embodiment, the plant protein material has an area ratio of 10 to 40% for 2000 Da or more and less than 10000 Da, for example, from 10 to 35%, from 15 to 35%, from 10 to 30%, or from 20 to 30%; and from 50 to 80% for 10000 Da or more, for example, from 55 to 75%, from 60 to 75%, from 60 to 70%, or from 65 to 75%, in molecular weight distribution when the molecular weight is measured by gel filtration. In a more specific embodiment, the area ratio of less than 2000 Da is 15% or less, for example, 13% or less, 9% or less, 8% or less, or 7% or less, and the lower limit is, for example, 0% or more, 1% or more, 1.5% or more, 2% or more, or 3% or more. More specific examples of the area ratio of less than 2000 Da include, for example, area ratios of 0 to 15%, of 1 to 13%, and of 2 to 8%.

In another certain embodiment, the plant protein material has an area ratio of 45 to 90% for 2000 Da or more and less than 20000 Da, for example, from 50 to 85%, from 55 to 80%, from 55 to 75%, or from 60 to 70%, in molecular weight distribution when the molecular weight is measured by gel filtration. In an even more specific embodiment, the area ratio of less than 2000 Da is 45% or less, for example, 40% or less, 35% or less, 30% or less, or 25% or less, and the lower limit is, for example, 0% or more, 1% or more, 2% or more, 5% or more, 10% or more, or 15% or more. More specific examples of the area ratio of less than 2000 Da include, for example, area ratios of 0 to 45%, of 5 to 35%, and of 10 to 25%. In addition, in a still more specific embodiment, the area ratio of 10000 Da or more is less than 50%, for example, from 5 to 45%, from 10 to 40%, or from 15 to 35%. In yet more specific embodiment, the area ratio of 20000 Da or more is less than 55%, for example, 50% or less, 40% or less, 30% or less, 25% or less, 20% or less, or 15% or less, and the lower limit is, for example, 0% or more, 1% or more, 2% or more, 5% or more, or 10% or more. More specific examples of the area ratio of 20000 Da or more include, for example, area ratios of 0 to 50%, of 5 to 30%, and of 10 to 20%.

The molecular weight distribution of the plant protein material in such ranges indicates that a moderately low molecular weight protein is a main component while an amount of a highly degraded low molecular weight peptide is small. The measurement of the molecular weight distribution is based on a method described later.

The plant protein material used in the oil and/or fat emulsion composition of the present aspect satisfies a) to c) above. Hereinafter, although not particularly limited, characteristics that the plant protein material can have in more specific embodiments will be described.

### d) Heat Gelling Properties

In a specific embodiment, the plant protein material used in the oil and/or fat emulsion composition of the present aspect does not exhibit gelling properties when a solution of this is heated at a high concentration. Whether the plant protein material has gelling properties is determined by a method described later in more detail; for example, when a 22 mass% solution is heated at 80°C for 30 minutes, the solution does not gel.

### e) Viscosity

In a certain embodiment, when a viscosity of an aqueous solution of the plant protein material used in the oil and/or fat emulsion composition of the present aspect is measured under certain conditions, the viscosity can be low; specifically, the viscosity of an aqueous solution with a protein content of 10 mass% can be 50 mPa·s or less at 60°C, for example, 40 mPa·s or less, 35 mPa·s or less, 30 mPa·s or less, 20 mPa·s or less, 15 mPa·s or less, 10 mPa·s or less, or 5 mPa·s or less. In addition, the lower limit of the viscosity is not particularly limited, but examples include viscosities of 0.1 mPa·s or more, of 0.5 mPa·s or more, and of 1 mPa·s or more. More specific examples of the viscosity include viscosities of 0.1 to 50 mPa·s, of 0.5 to 30 mPa·s, and of 1 to 10 mPa·s. The viscosity is measured by a method described later.

### f) Addition of Guanidine Hydrochloride and Addition of Ammonium Sulfate

In a certain embodiment, addition of guanidine hydrochloride to an aqueous solution of the plant protein material used in the oil and/or fat emulsion composition of the present aspect yields no white turbidity in the aqueous solution. This is an indicator showing that the protein is fully denatured. For example, addition of guanidine hydrochloride to an undenatured protein, such as a soybean protein isolate or sodium caseinate, yields a white turbidity. In the present specification, yielding no white turbidity by adding guanidine hydrochloride can be confirmed by visually observing no white turbidity in an aqueous solution with a crude protein concentration of 0.1% and 250 mM guanidine hydrochloride, or by checking that an OD 660 nm of the aqueous solution is less than 0.3, for example, 0.2 or less, 0.1 or less, or 0. In addition, in a certain embodiment, addition of ammonium sulfate to an aqueous solution of the plant protein material used in the oil and/or fat emulsion composition of the present aspect yields a white turbidity in the aqueous solution. This is an indicator showing that the protein has a certain degree of polymerization and is not an excessively degraded peptide, such as a dipeptide or a tripeptide. In the present specification, yielding a white turbidity by adding ammonium sulphate can be confirmed by visually observing a white turbidity in an aqueous solution with a crude protein concentration of 0.1% and 2 M ammonium sulfate, or by checking that an OD 660 nm of the aqueous solution is 0.3 or more, for example, 0.4 or more, or 0.5 or more. Procedures for adding guanidine hydrochloride and ammonium sulfate are based on a method described later.

### g) Solubility

In a certain embodiment, the plant protein material used in the oil and/or fat emulsion composition of the present aspect can have a solubility in water of 20 mass% or more at room temperature, for example, 25 mass% or more. The upper limit of the solubility is not particularly limited, but examples include solubilities of 55 mass% or less, 50 mass% or less, 45 mass% or less, 40 mass% or less, and 35 mass% or less. More specific examples of the solubility include, for example, solubilities of 20 to 55 mass% and from 25 to 40 mass%.

### h) pH of Aqueous Solution

In a certain embodiment, an aqueous solution of the plant protein material used in the oil and/or fat emulsion composition of the present aspect, the aqueous solution with a protein concentration of 4%, can have a pH of 3.0 to 8.0, for example, a pH of 4.5 to 6.5 or of 5.0 to 6.0.

### i) "Degradation/Denaturation and Molecular Weight Distribution Adjustment Treatments" of Plant Protein Material

The plant protein material used in the oil and/or fat emulsion composition of the present aspect can be obtained by applying combination of "degradation/denaturation treatment" for degrading and/or denaturing a protein and "molecular weight distribution adjustment treatment" for adjusting molecular weight distribution of the protein. Examples of the "degradation/denaturation treatment" include pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combination of these. The order and number of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is obtained by the "degradation/denaturation treatment, the "molecular weight distribution adjustment treatment" need not be performed. When these treatments are combined and performed a plurality of times, all the treatments may be performed continuously from raw materials or may be performed at time intervals. For example, a commercially available product that has undergone a certain treatment may be used as a raw material to perform another treatment. As long as the above properties are satisfied, the specific plant protein material may be obtained by mixing a plant protein material that has undergone the molecular weight distribution adjustment treatment with a protein that has not undergone the molecular weight distribution adjustment treatment. In this case, a ratio of both (protein material that has undergone the treatment:protein that has not undergone the treatment) can be appropriately adjusted within a range that satisfies the above properties, but examples include ratios of 1:99 to 99:1, for example, of 50:50 to 95:5 and of 75:25 to 90:10, in terms of mass ratio. In an embodiment, the plant protein material used in the oil and/or fat emulsion composition of the present aspect is composed of a plant protein material that has undergone the "degradation/denaturation and molecular weight distribution adjustment treatments".

The conditions of the treatment for degrading or denaturing a protein, for example, types and concentrations of an enzyme, pH, an organic solvent, a mineral, and the like, a temperature, a pressure, an output intensity, an electric current, and time, can be appropriately set by those skilled in the art. In the case of an enzyme, examples of the enzyme to be used include proteases that are classified into "metal proteases", "acidic proteases", "thiol proteases", and "serine proteases". The reaction can be carried out at a reaction temperature of 20 to 80°C and preferably of 40 to 60°C. In the case of pH adjustment treatment, the treatment can be performed in a pH range including any values of pH 2, 2.5, 3, 3.5, 4, 4.5, 5, 5.5, 6, 6.5, 7, 7.5, 8, 8.5, 9, 9.5, 10, 10.5, 11, 11.5, and 12 as the upper limit and the lower limit, for example, in a range of pH 2 to 12. In the case of acid treatment, the method may be a method of adding an acid or a method of performing fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid, such as fruit juice of lemon or the like, concentrated fruit juice, fermented milk, yogurt, or brewed vinegar. In the case of alkali treatment, an alkali, such as sodium hydroxide or potassium hydroxide, can be added. In the case of denaturant treatment, a denaturant, such as guanidine hydrochloride, urea, arginine, or PEG, may be added. In the case of heating or cooling treatment, examples of the heating temperature include ranges including any temperatures of 60°C, 70°C, 80°C, 90°C, 100°C, 110°C, 120°C, 125°C, 130°C, 135°C, 140°C, 145°C, and 150°C as the upper limit and the lower limit, for example, a range of 60°C to 150°C. Examples of the cooling temperature include ranges including any temperatures of -10°C, -15°C, -20°C, -25°C, -30°C, -35°C, -40°C, -45°C, -50°C, - 55°C, -60°C, -65°C, -70°C, and -75°C as the upper limit and the lower limit, for example, a range of -10°C to -75°C. Examples of the heating or cooling time include ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes as the upper limit and the lower limit, for example, a range of 5 seconds to 200 minutes. In the case of high-pressure treatment, examples of the condition of the pressure include ranges including any pressures of 100 MPa, 200 MPa, 300 MPa, 400 MPa, 500 MPa, 600 MPa, 700 MPa, 800 MPa, 900 MPa, and 1000 MPa as the upper limit and the lower limit, for example, a range of 100 MPa to 1000 MPa. In the case of organic solvent treatment, examples of the solvent to be used include alcohols and ketones, for example, ethanol and acetone. In the case of mineral addition treatment, examples of the mineral to be used include divalent metal ions, such as calcium and magnesium. In the case of supercritical treatment, the treatment can be performed, for example, using carbon dioxide in a supercritical state at a temperature of about 30°C or higher and a pressure of about 7 MPa or more. In the case of ultrasonic treatment, the treatment can be performed, for example, by irradiation with an output of 100 to 1000 W at a frequency of 100 KHz to 2 MHz. In the case of electrolysis treatment, for example, a protein aqueous solution can be treated by applying a voltage of 100 mV to 1000 mV. In a specific embodiment, the treatment to degrade and/or denature a protein is selected from denaturant treatment, heating treatment, and combinations of those.

The conditions of the treatment for adjusting molecular weight distribution of a protein, for example, a type of filter medium, a carrier for gel filtration, the centrifugal rotation number, an electric current, and time, can be appropriately set by those skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of 1000 to 3000 x g and of 5 to 20 minutes.

### Oil and/or Fat

The oil and/or fat contained in the oil and/or fat emulsion composition of the present aspect is not particularly limited, and an oil and/or fat, regardless of plant or animal origin, may be used. Examples of the plant oil and/or fat that can be used include plant oils and/or fats, such as soybean oils, rapeseed oils, corn oils, cottonseed oils, peanut oils, sunflower oils, rice oils, safflower oils, olive oils, sesame oils, palm oils, palm kernel oils, and coconut oils; animal oils and/or fats, such as beef fats, milk fats, fish oils, and lards; processed oils and/or fats obtained by fractionation, hydrogenation, interesterification, and/or the like of these; and further mixed oils and/or fats of these. In an embodiment, the oil and/or fat contained in the oil and/or fat emulsion composition of the present aspect is in a liquid to semi-solid state at normal temperature, preferably at 25°C, and for example, in a liquid state. In an embodiment, if it is better to avoid an animal raw material due to a health problem, such as, for example, cholesterol accumulation, a plant oil and/or fat is preferably used without using an animal oil and/or fat. In a certain embodiment, the proportion of an animal oil and/or fat in the oil and/or fat is 20% or less, for example, 10% or less, 5% or less, 3% or less, 1% or less, or 0.5% or less, and for example, from 0 to 20% or from 0.5 to 10%.

The content of the oil and/or fat is determined by the oil and/or fat content in the oil and/or fat emulsion composition. In a case where the plant protein material contains an oil and/or fat, the content of the oil and/or fat including the amount of the oil and/or fat in the protein material is calculated.

The oil and/or fat content is measured by an acid decomposition method.

### Additional Raw Material

The oil and/or fat emulsion composition of the present aspect can contain an additional raw material of various types as necessary although this is not essential.

### Carbohydrate

The oil and/or fat emulsion composition of the present aspect may contain or need not contain a carbohydrate. Specific examples of the carbohydrate that can be contained in the oil and/or fat emulsion composition of the present aspect include glucides including starch and dietary fiber. Specific examples of the carbohydrate include fructose, glucose, sugar, maltose, lactose, trehalose, starch syrup, coupling sugar, honey, isomerized sugar, invert sugar, oligosaccharides (such as isomaltooligosaccharide, reduced xylooligosaccharide, reduced gentiooligosaccharide, xylooligosaccharide, gentiooligosaccharide, nigerooligosaccharide, theandeoligosaccharide, and soybean oligosaccharide), sugar alcohols (such as maltitol, erythritol, sorbitol, palatinite, xylitol, lactitol, and reduced starch syrup), dextrin, and starches (such as raw starch and modified starch). In addition, examples of the dietary fiber include polydextrose, indigestible dextrin, crystalline cellulose, and thickening polysaccharides.

### Emulsifier

The oil and/or fat emulsion composition of the present aspect may contain or need not contain an emulsifier. Examples of the emulsifier include glycerol fatty acid esters, polyglycerol fatty acid esters, sucrose fatty acid esters, propylene glycol fatty acid esters, sorbitan fatty acid esters, organic acid monoglycerides, polysorbate, and lecithin. One of these emulsifiers may be used individually, or a plurality of these may be used in combination.

A blending amount of the emulsifier in the oil and/or fat emulsion composition of the present aspect can be appropriately adjusted according to various embodiments of the oil and/or fat emulsion composition, foods to which the oil and/or fat emulsion composition is added, and the like. Examples of the blending amount include, for example, amounts of 0.0 to 2.5 mass% and of 0.3 to 2 mass%.

### Polyvalent Metal Ion

The oil and/or fat emulsion composition of the present aspect may contain or need not contain a polyvalent metal ion. In addition to calcium and magnesium as typical polyvalent metal ions, examples of other polyvalent metal ions include iron, zinc, copper, selenium, chromium, cobalt, manganese, and molybdenum. They can be each blended in the form of any salt, such as a chloride or a sulfide, but preferably in the form of a salt with high solubility, such as calcium chloride. In one embodiment, the present invention can provide the oil and/or fat emulsion composition having high mineral resistance. In such an embodiment, the oil and/or fat emulsion composition, even if contains a polyvalent metal ion, hardly causes aggregation by heating treatment in the production process of the oil and/or fat emulsion composition or the production process of a food to which the oil and/or fat emulsion composition is added.

### Salt

The oil and/or fat emulsion composition of the present aspect may contain or need not contain a salt. Examples of the salt include organic acid salts, such as sodium citrate; phosphate salts, such dibasic sodium phosphate, dibasic potassium phosphate, and sodium polyphosphate; and sodium bicarbonate. More specifically, in the case of using a salt, the salt is contained in an amount of 0.05 to 3.0 mass% and preferably of 0.1 to 1.0 mass% in the oil and/or fat emulsion composition.

### Additional Additives

To the oil and/or fat emulsion composition of the present aspect, a milk product and a processed milk product, such as milk, butter, or cheese; fruit juice, cacao mass, cocoa powder, a flavor, a colorant, a sweetener, a pH adjuster, a preservative, or the like may be added or need not be added as necessary for the purpose of adjusting flavor, color, or texture and improving storage stability.

### Production Aspect of High Oil Content Oil-in-Water Oil and/or Fat Emulsion Composition

Hereinafter, a production aspect of the oil and/or fat emulsion composition of the present aspect will be described, but the production is not limited to the aspect. The above specific plant protein material, an oil and/or fat, water, and an additional raw material as necessary, such as a carbohydrate, an emulsifier, or a mineral, are mixed and the solution is homogenized with a high-pressure homogenizer or the like, and an oil-in-water oil and/or fat emulsion composition is obtained. A specific method for preparing the oil and/or fat emulsion composition may be a known method, but a specific example will be described below.

### Plant Protein Material

The oil and/or fat emulsion composition of the present aspect can be prepared using the above specific plant protein material. Typically, the oil and/or fat emulsion composition can be prepared using a plant protein material that has undergone the "degradation/denaturation and molecular weight distribution adjustment treatments". Alternatively, the above specific plant protein material can be easily obtained by purchasing it from a manufacturer of protein materials, for example, Fuji Oil Co., Ltd., or asking the manufacturer to produce it. However, commercially available soybean protein materials known in the art, such as "Fujipro E", "Fujipro CL", "Fujipro AL", "New Fujipro 4500", "Proleena RD-1", "Proleena 900", and "Proleena HD101R", do not correspond to the protein material satisfying all the above properties of a) to c). The plant protein material may be added to an aqueous phase portion, an oil phase portion, or both the aqueous phase portion and the oil phase portion in preparing the oil and/or fat emulsion composition. In an embodiment, the oil and/or fat emulsion composition of the present aspect can also be prepared by subjecting a protein raw material to the "degradation/denaturation and molecular weight distribution adjustment treatments", for example, during preparation of the aqueous phase portion or the oil phase portion described below. Even in such an embodiment, the oil and/or fat emulsion composition of the present aspect can be regarded as an emulsion composition containing the plant protein material satisfying the above characteristics described above.

### Mixing and Homogenization

The aqueous phase portion can be prepared by preparing an aqueous solution of the above specific plant protein material. An additional raw material may be added or need not be added to the aqueous solution as necessary. The concentration of the plant protein material in the aqueous solution is not particularly limited, and examples include concentrations of 1 to 40%, of 2 to 35%, of 3 to 30%, of 4 to 20%, of 5 to 15%, and of 6 to 10%. In addition, the aqueous phase portion may be prepared without using the above specific plant protein material. The pH of the aqueous phase portion is not particularly limited and need not be adjusted or may be adjusted by adding an acid or an alkali. Examples of the pH of the aqueous phase portion include a pH of 3 to 10, a pH of 4 to 6.5, and a pH of 7 to 9. The preparation temperature of the aqueous phase portion is not particularly limited and may be, for example, room temperature. In a more specific embodiment, an aqueous phase portion containing a hydrophilic emulsifier, carbohydrate, and/or the like whose solubility is improved by heating can be prepared by dissolving or dispersing such a material in a temperature range of for example, 20 to 70°C and preferably of 55 to 65°C. The raw material to be added to the aqueous phase portion can be appropriately determined by those skilled in the art. For example, in a case of adding a salt, a water-soluble flavor, and/or the like, such a material is added to the aqueous phase portion.

The oil phase portion may be prepared using only an oil and/or fat, or may be prepared by mixing an oil-soluble material with an oil and/or fat and dissolving or dispersing the oil-soluble material in a temperature range of, for example, 50 to 80°C, preferably of 55 to 70°C. Furthermore, the above specific plant protein material may be dispersed in the oil phase portion. The raw material to be added to the oil phase portion can be appropriately determined by those skilled in the art. For example, in a case of using a lipophilic emulsifier, a lipophilic flavor, and/or the like, such a material may be added to a part or all of the raw material oil and/or fat.

The resulting oil phase portion and the resulting aqueous phase portion are warmed, for example, to 40 to 80°C and preferably to 55 to 70°C, mixed, and preliminarily emulsified. The preliminary emulsification can be carried out using a rotary stirrer, such as a homomixer. After the preliminary emulsification, the mixture is homogenized with a homogenizer. Alternatively, all the raw materials may be mixed and homogenized with a homogenizer without preliminary emulsification. In a more specific embodiment, preliminary emulsification and/or homogenization may be performed a plurality of times. In an even more specific embodiment, all or a part of the aqueous phase and a part of the oil phase may be mixed and preliminarily emulsified, the remaining raw materials may be added, and the mixture may be homogenized; a part of the aqueous phase and all or a part of the oil phase may be mixed and preliminarily emulsified, and the remaining raw materials may be added, and the mixture may be homogenized; or these processes may be repeated.

Examples of the homogenizer include a homomixer; a high-pressure homogenizer; a colloid mill; an ultrasonic emulsifier; an agihomomixer with both functions of an agitator and a homomixer; a cutter blade mixer, such as a silent cutter and a Stephan cooker; and a rotor stator type in-line mixer, such as an extruder and an emulder. For example, in a case of homogenization with a high-pressure homogenizer, the pressure can be from 10 to 100 MPa and preferably from 30 to 100 MPa.

### Heat Sterilization

The resulting oil and/or fat emulsion composition may be subjected or need not be subjected to heat sterilization treatment as necessary. In the case of subjecting the oil and/or fat emulsion composition to heat sterilization treatment, the oil and/or fat emulsion composition is treated by a UHT sterilization treatment method or the like by an indirect heating method or a direct heating method, and as necessary, the oil and/or fat emulsion composition is homogenized again with a high-pressure homogenizer and cooled to 2 to 15°C or the like. In an embodiment, the oil and/or fat emulsion composition has heat resistance and can be retort-sterilized. The temperature of the heat sterilization is not particularly limited, and examples include temperatures of 110 to 150°C and of 120 to 140°C. The time of the heat sterilization is not particularly limited, and examples include durations of 1 second to 60 minutes, of 3 seconds to 40 minutes, and of 5 seconds to 30 minutes, for example, of 2 to 7 seconds, of 1 to 25 minutes, and of 5 to 20 minutes.

### Applications of Oil and/or Fat Emulsion Composition

In a specific embodiment, the oil and/or fat emulsion composition of the present aspect can be used as it is as a food in an oil-in-water emulsion form, for example, cream, filling, or a mayonnaise-like food. In another embodiment, the oil and/or fat emulsion composition of the present aspect can be used as a food raw material. More specific examples include addition as a seasoning for enhancing a body taste and addition as a texture improving agent for improving the mouthfeel. In a more specific embodiment, the oil and/or fat emulsion composition of the present aspect can be used as a raw material for an emulsified food in which the whole food is in an oil-in-water emulsified form, for example, ice cream, ice milk, lacto ice, cream, filling, an oil and/or fat-containing liquid emulsified beverage, and a mayonnaise-like food.

### Solid Fat Substitute Oil and/or Fat Composition

In one aspect, the present invention provides a solid fat substitute oil and/or fat composition produced by drying the oil and/or fat emulsion composition of the above aspect. A typical example of this composition has physical characteristics of an oil-based gel referred to as "oleogel", "organogel", "oilgel", "fatgel", "lipogel", or the like.

The solid fat substitute oil and/or fat composition of the present aspect is produced by drying the oil and/or fat emulsion composition of the above aspect. The drying method may be a known method, and examples include heat drying, ventilation drying, and freeze drying. The drying temperature is not particularly limited but is preferably 100°C or lower, and examples include temperatures of 40 to 90°C, of 45 to 80°C, of 50 to 70°C, and of 55 to 65°C. The drying time is not particularly limited, and examples include durations of 1 hour to 72 hours, of 5 hours to 48 hours, and of 10 hours to 24 hours. For example, a solid fat substitute oil and/or fat composition with a desired shape can be obtained by pouring the oil and/or fat composition of the above aspect into a mold and drying it. In an embodiment, the solid fat substitute oil and/or fat composition contains less than 10 mass%, for example, less than 5 mass%, from 1 to 9 mass%, from 2 to 8 mass%, from 3 to 7 mass%, or from 1 to 4 mass% of water, and more than 90 mass%, for example, more than 95 mass%, from 91 to 99 mass%, from 92 to 98 mass%, from 93 to 97 mass%, or from 94 to 96 mass% of an oil and/or fat.

In an embodiment, the solid fat substitute oil and/or fat composition of the present aspect exhibits a solid state like beef fat or pork fat. In addition, in an embodiment, the solid fat substitute oil and/or fat composition of the present aspect can be browned by heating with a frying pan or the like. In addition, in another embodiment, the solid fat substitute oil and/or fat composition of the present aspect can exude the oil and/or fat in the composition by applying pressure, such as chewing.

In an embodiment, the solid fat substitute oil and/or fat composition of the present aspect can be used as a fat substitute for meat, such as beef, pork, and fish meat. In addition, in an embodiment, the solid fat substitute oil and/or fat composition of the present aspect can improve the texture and flavor by mixing into a meat raw material or the like.

### Other Aspects

The present invention can also provide the following aspects:
(1) an oil-in-water oil and/or fat emulsion composition containing water, a protein, and an oil and/or fat, in which
   an amount of the oil and/or fat is 50 mass% or more when a total amount of water, the protein, and the oil and/or fat in the oil and/or fat emulsion composition is 100 mass%,
   a compressive load of the oil and/or fat emulsion composition measured at 25°C is 2.0 N or more, and
   50 mass% or more in a protein material related to the protein is derived from a plant protein material having all characteristics of a) to c) below:
      a) a protein content in a solid content is 70 mass% or more,
      b) an NSI is 80 or more, and
      c) an area ratio of 2000 Da or more and less than 20000 Da is 30% or more and an area ratio of 20000 Da or more is 70% or less in a measurement result of molecular weight distribution;
(2) the oil and/or fat emulsion composition according to (1), in which the plant protein material has an area ratio of 2000 Da or more and less than 20000 Da of 45 to 90% in a measurement result of molecular weight distribution;
(3) the oil and/or fat emulsion composition according to (2), in which an area ratio of less than 2000 Da is 45% or less in a measurement result of molecular weight distribution;
(4) the oil and/or fat emulsion composition according to any of (1) to (3), in which the compressive load is 4.0 N or more;
(5) the oil and/or fat emulsion composition according to any of (1) to (4), in which the amount of the oil and/or fat is 75% or more when the total amount of water, the protein, and the oil and/or fat in the oil and/or fat emulsion composition is 100 mass%;
(6) the oil and/or fat emulsion composition according to any of (1) to (5), in which the plant protein material is derived from a legume;
(7) the oil and/or fat emulsion composition according to any of (1) to (6), containing no animal protein; and
(8) a solid fat substitute oil and/or fat composition produced by drying the oil and/or fat emulsion composition described in any of (1) to (7).

### Measurement Methods

In the present specification, components and physical properties related to the oil and/or fat emulsion composition and the plant protein material are measured in accordance with the following methods.

### Oil-Off

A cylindrical ring with an inside diameter of 17 mm and a height of 7 mm is placed at the center of a filter paper (ADVANTEC No. 1, available from Toyo Roshi Kaisha, Ltd.) whose weight has been measured in advance, and is filled with 1.35 g of a sample. After heating at 60°C for 48 hours, the weight of the ring and the filter paper from which the sample remaining in the ring has been removed is measured, and the weight of the filter paper measured in advance is subtracted to obtain the oil-off weight. The percentage of the oil-off weight to the oil and/or fat weight of the sample (oil and/or fat content of the sample before heat drying) is defined as the oil-off rate.

### Emulsion Stability Evaluation (Centrifuge Resistance)

In an Eppendorf tube, 1.8 g of a sample is placed, centrifuged at 20630 x g for 20 minutes, and whether emulsification is maintained and whether water or oil is separated are visually observed. The sample is evaluated as ∘ when no separation of water or oil is observed, △ when slight separation of water or oil is observed, and × when demulsification is observed.

### Emulsion Stability Evaluation (Heating Resistance)

In an Eppendorf tube, 1.8 g of a sample is placed, heated in an autoclave at 120°C for 10 minutes, and then subjected to the same operation and evaluation as in "Emulsion Stability Evaluation (Centrifuge Resistance)" above.

### Compressive Load

A cylindrical ring with an inside diameter of 17 mm and a height of 7 mm is filled with a sample and placed on a stage of a creep meter (RHEONER II CREEP METER RE2-33005B, available from Yamaden Co., Ltd.), and breaking strength when a plunger is inserted under the following conditions is measured.
· Plunger: cylindrical, No. 3 ϕ16 mm
· Load cell: 200 N
· Measuring speed (insertion speed of the plunger): 0.5 mm/sec
· Sample strain rate at the end of measurement (ratio of the distance by which the plunger is pushed to the thickness of the sample): 90%

### Protein Content

The protein content is measured by the Kjeldahl method. Specifically, mass of nitrogen measured by the Kjeldahl method relative to mass of a protein material dried at 105°C for 12 hours is represented by "mass%" as the protein content in the dried material. The nitrogen conversion coefficient is 6.25. Basically, the content is calculated by rounding the value of the second decimal place.

### Molecular Weight Distribution

An eluent is added to a protein material to adjust the concentration to 0.1 mass%. The solution is filtered with a 0.2 µm filter, and the filtered solution is used as a sample solution. A gel filtration system is assembled by connecting two types of columns in series, known proteins and the like (Table 1) used as molecular weight markers are first charged, and a calibration curve is determined from the relationship between the molecular weight and the retention time. The sample solution is then charged, and the content ratio % of each molecular weight fraction is determined by the ratio of the area of a specific molecular weight range (time range) to the area of the total absorbance chart (1st column is "TSK gel G3000SW_{XL}" (SIGMA-ALDRICH) and 2nd column "TSK gel G2000SW_{XL}" (SIGMA-ALDRICH); an eluent is a mixture of 1% SDS, 1.17% NaCl, and a 50 mM phosphate buffer (pH 7.0); 23°C; a flow rate of 0.4 mL/min; detection at UV 220 nm). Basically, the content ratio % is calculated by rounding the value of the second decimal place.

**[Table 1]**

| Molecular weight markers | |
|---|---|
| Marker | Molecular weight |
| Thyroglobulin | 335000 |
| γ-globulin | 150000 |
| Albumin | 67000 |
| Peroxidase | 43000 |
| Myoglobin | 18000 |
| Cytochrome C | 12384 |
| Insulin | 5734 |
| Glutathione | 307 |
| p-Amino acid benzoic acid | 137 |

### Addition of Guanidine Hydrochloride

An aqueous solution of a protein material with a crude protein concentration of 0.2% is prepared. If a white turbidity occurs during preparation of the aqueous solution, about 1 to 10% of the aqueous solution is centrifuged after the preparation, the supernatant is recovered and diluted to a crude protein concentration of 0.2%, and this is used as a sample solution. An equivalent amount of a guanidine hydrochloride solution is added to this to prepare a solution with a crude protein concentration of 0.1% and a guanidine hydrochloride concentration of 250 mM, and this is allowed to stand overnight in a refrigerator. The presence or absence of a white turbidity is visually observed. In addition, the degree of turbidity is measured at a wavelength of 660 nm using a 10-mm glass cell.

### Addition of Ammonium Sulfate

An aqueous solution of a protein material with a crude protein concentration of 0.2% is prepared. If a white turbidity occurs during preparation of the aqueous solution, about 1 to 10% of the aqueous solution is centrifuged after the preparation, the supernatant is recovered and diluted to a crude protein concentration of 0.2%, and this is used as a sample solution. An equivalent amount of an ammonium sulfate solution is added to this to prepare a solution with a crude protein concentration of 0.1% and an ammonium sulfate concentration of 2 M, and this is allowed to stand overnight in a refrigerator. The presence or absence of a white turbidity is visually observed. In addition, the degree of turbidity is measured at a wavelength of 660 nm using a 10-mm glass cell.

### Viscosity

The viscosity of a protein material is determined as a measured value of an aqueous solution of the protein material prepared to have a protein content of 10 mass%, the measured value indicated after 1 minute at 100 rpm using a B-type viscometer (desirably available from Brookfield) with a rotor "#LV-1" at 60°C. If measurement is impossible with "#LV-1", the rotor is replaced by "#LV-2", "#LV-3", "#LV-4", or "#LV-5". If measurement is impossible with "#LV-1" at 100 rpm due to low viscosity, the viscosity is expressed as "lower limit", and if measurement is impossible with "#LV-5" at 100 rpm due to high viscosity, the viscosity is expressed as "upper limit".

### Examples

Hereinafter, embodiments of the present invention will be more specifically described by examples and the like. In examples, "%" and "parts" mean "mass%" and "parts by mass" unless otherwise specified.

### Example 1: Preparation of Plant Protein Materials

The following plant protein materials were obtained and prepared. The protein contents of these plant protein materials were all 80 mass% or more. Detailed analytical values are shown in Table 2.
Sample A: a product obtained by subjecting a soybean protein isolate to degradation/denaturation and molecular weight distribution adjustment treatments (a test product of Fuji Oil Co., Ltd.; the raw material soybean protein isolate was Fujipro F (a commercially available product from Fuji Oil Co., Ltd.)
Sample B: a product obtained by subjecting a pea protein isolate to degradation/denaturation and molecular weight distribution adjustment treatments (a test product of Fuji Oil Co., Ltd.; the raw material pea protein isolate was Empro86HV, a commercially available product from Emsland)
Sample C: a product obtained by subjecting a soybean protein isolate to degradation/denaturation treatment (test product of Fuji Oil Co., Ltd.)
Sample D: a soybean protein isolate (Fujipro RN, a commercially available product from Fuji Oil Co., Ltd.)
Sample E: a soybean peptide (Hinute DH, a commercially available product from Fuji Oil Co., Ltd.)

**Table 2**

| | 20000 Da or more | 2000 Da or more Less than 20000 Da | Less than 2000 Da | 10000 Da or more | Guanidine hydrochloride addition of 250 mM | Ammonium sulfate addition of 2M | NSI | 4% aqueous solution pH |
|---|---|---|---|---|---|---|---|---|
| Sample A | 14 | 64 | 22 | 27 | Transparent | White turbidity | 98.1 | 5.3 |
| Sample B | 12 | 68 | 20 | 25 | Transparent | White turbidity | 100.1 | 5.3 |
| Sample C | 55 | 38 | 7 | 67 | White turbidity | White turbidity | 98.4 | 6.3 |
| Sample D | 81 | 13 | 7 | 85 | White turbidity | White turbidity | 90.0 | 7.3 |
| Sample E | 31 | 55 | 14 | 44 | White turbidity | White turbidity | 75.0 | 6.6 |

In addition, Sample A was dissolved in distilled water, and a 10 mass% aqueous solution with a pH of 7 was prepared (pH 5.3). The viscosity of this aqueous solution at room temperature was 3.1 mPa·s. Furthermore, the viscosity of a 10 mass% aqueous solution (pH 6.3) of Sample C at room temperature was 11 mPa·s.

### Example 2: Preparation of Oil-in-Water Oil and/or Fat Emulsion Compositions and Evaluation of Heat Resistance

Oil-in-water oil and/or fat emulsion compositions were prepared using Samples A to E above.

To 2 parts by weight of each sample, 18 parts by weight of water was added, and an aqueous phase portion was prepared. An oil phase portion was prepared by mixing 79.36 parts of a high-oleic sunflower oil (Hiol 75B, available from Fuji Oil Co., Ltd.) and 0.64 parts of beta-carotene (available from San-Ei Gen F.F.I., Inc.). The aqueous phase portion was added to a cutter blade mixer (Robot Coupe R-3D, FMI Corporation) and stirred for 10 seconds, and then the oil phase portion was gradually added with stirring. The mixture was stirred for 2 minutes, and an oil-in-water oil and/or fat emulsion composition was prepared.

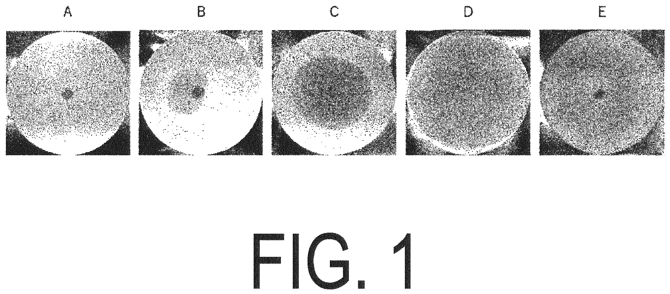

The prepared oil-in-water oil and/or fat emulsion composition was evaluated according to the test described in "Oil-Off" above. The results are shown in Table 3 and FIG. 1.

**Table 3**

| Sample name | A | B | C | D | E |
|---|---|---|---|---|---|
| Oil-off rate (%) | 0.0 | 5.9 | 16.8 | 46.3 | 90.0 |

Samples A and B exhibited very good heat resistance, and sample C exhibited good heat resistance. Samples D and E did not exhibit heat resistance.

### Example 3: Evaluation of Emulsion Stability of Oil-in-Water Oil and/or Fat Emulsion Composition

Oil-in-water oil and/or fat emulsion compositions were prepared using Samples A, C, D, and E above.

A 10% aqueous solution of each sample was prepared and added to a cutter blade mixer (Robot Coupe R-3D, FMI Corporation), a high oleic sunflower oil (Hiol 75B, available from Fuji Oil Co., Ltd.) was gradually added with stirring, and an oil and/or fat emulsion composition with an oil content of 70% or 80% was prepared. Each of the oil and/or fat emulsion compositions was evaluated according to the tests described in "Emulsion Stability Evaluation (Centrifuge Resistance)" and "Emulsion Stability Evaluation (Heating Resistance)" above. The results are shown in Table 4.

**[Table 4]**

| | Centrifuge resistance | Heating resistance |
|---|---|---|
| Sample A | ○ | ○ |
| Sample C | ○ | ○ |
| Sample D | ○ | Δ |
| Sample E | Δ | Δ |

Samples A and C gave good results for both centrifuge resistance and heating resistance. Sample D gave a good result for centrifuge resistance, but slight oil separation was observed in the heating resistance test. For Sample E, slight oil separation was observed in both tests of centrifuge resistance and heating resistance.

### Example 4: Examination of Plant Protein Material Aqueous Solution Concentration and Maximum Oil Content

For each of Sample A, Sample C, and Sample D, aqueous solutions of various concentrations were prepared, and the maximum oil content at which an oil and/or fat emulsion composition can be prepared was determined for each prepared aqueous solution. Specifically, 4, 6, 8, 10, 15, 25, and 35% aqueous solutions were prepared for each sample and added to a cutter blade mixer (Robot Coupe R-3D, FMI Corporation), a high oleic sunflower oil (Hiol 75B, available from Fuji Oil Co., Ltd.) was gradually added with stirring with an oil content of 80% as a target lower limit, and the maximum oil content at which an emulsion can be prepared was examined. Sample A could not be dissolved in water at 40%, Sample C at 25%, and Sample D at 15%, and aqueous solutions could not be prepared at these concentrations. The results are shown in Table 5.

**[Table 5]**

| Maximum oil content (%) | | | |
|---|---|---|---|
| Aqueous solution concentration | Sample A | Sample C | Sample D |
| 35% | 80.0 | - | - |
| 25% | 85.0 | - | - |
| 15% | 87.5 | 82.5 | - |
| 10% | 87.5 | 85.0 | 81.8 |
| 8% | 90.0 | 87.5 | 84.1 |
| 6% | 87.5 | 87.5 | 85.0 |
| 4% | 87.5 | 87.5 | 85.0 |

Oil and/or fat emulsion compositions were able to be produced from Sample A and Sample C in a wider aqueous solution concentration range than from Sample D. In addition, oil and/or fat emulsion compositions with a high oil content were able to be produced from Sample C, and oil and/or fat emulsion compositions with a higher oil content were able to be produced from Sample A.

### Example 5: Measurement of Compressive Load

The oil and/or fat emulsion composition prepared with the maximum oil content obtained in Example 4 was subjected to the test described in "Compressive Load" above. The results are shown in Table 6.

**[Table 6]**

| Compressive load (N) | | | |
|---|---|---|---|
| Aqueous solution concentration | Sample A | Sample C | Sample D |
| 35% | 82.9 | - | - |
| 25% | 49.8 | - | - |
| 15% | 23.2 | 20.3 | - |
| 10% | 10.8 | 13.7 | 16.8 |
| 8% | 8.4 | 8.7 | 11.7 |
| 6% | 5.1 | 5.2 | 8.2 |
| 4% | 2.7 | 2.9 | 5.1 |

Oil and/or fat emulsion compositions with a wider range of compressive load were able to be produced from Sample A and Sample C than from Sample D. Oil and/or fat emulsion compositions with higher compressive load were able to be produced from Sample A.

### Example 6: Preparation of Solid Fat Substitute Oil and/or Fat Compositions

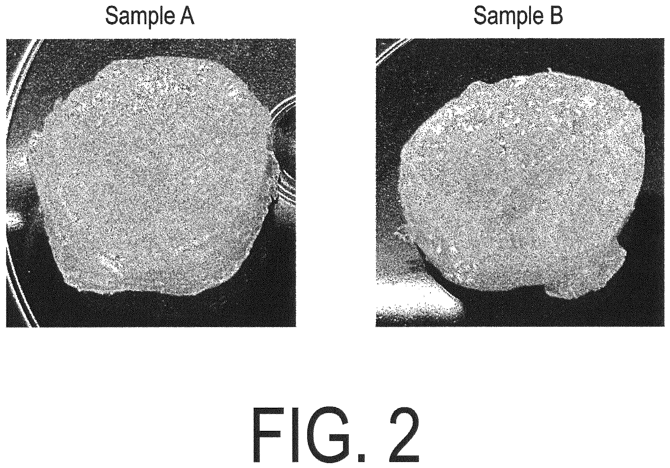

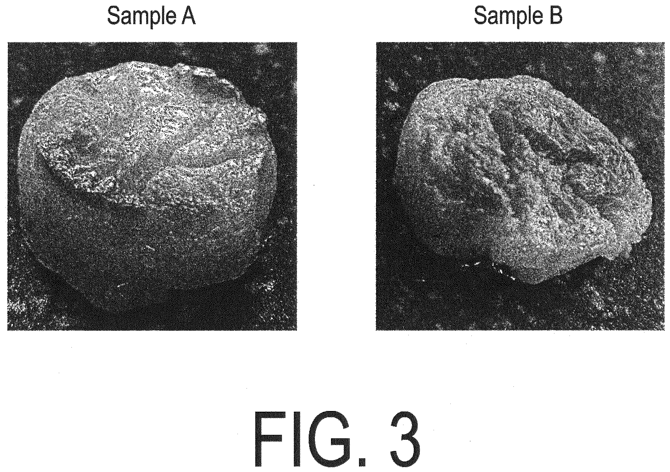

Oil and/or fat emulsion compositions with an oil content of 85 mass% were each prepared by the method in Example 4 using a 20 mass% aqueous solution of Sample A or B. The oil and/or fat emulsion compositions were each placed in a mold and dried in an oven at 60°C for 48 hours, and solid fat substitute oil and/or fat compositions were prepared (FIG. 2). The solid concentrations before drying are shown in Table 7. The resulting solid fat substitute oil and/or fat compositions were in a solid state, and oil separation was not observed. Pressing the compositions strongly with a finger slightly exuded the oil and/or fat to the pressed portion. Heating in a frying pan browned the compositions, showing a property like that of baked fatty meat (FIG. 3).

**[Table 7]**

| Item | Sample A | Sample B |
|---|---|---|
| Solid content concentration before drying (upon blending) % | 88.0 | 88.0 |
| Solid content concentration after drying % | 97.8 | 98.1 |

### Example 7: Preparation of Solid Fat Substitute Oil and/or Fat Composition with Special Shape

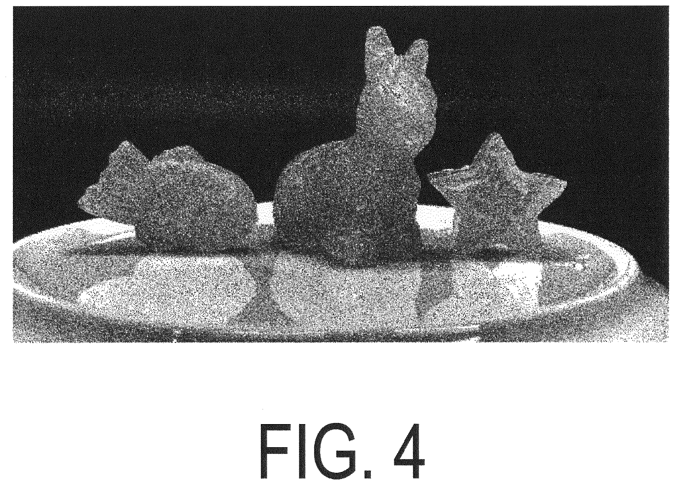

A clay-like oil and/or fat emulsion composition prepared from Sample A of Example 6 was formed by hand and heated under similar conditions. A solid material that maintained the shape before drying was able to be obtained (FIG. 4).

### Industrial Applicability

Selecting a plant protein material with specific properties and combining the material with an oil and/or fat can provide an oil-in-water oil and/or fat emulsion composition having high emulsion stability even with a high oil content and causing little oil-off during drying.

## Claims

1. An oil-in-water oil and/or fat emulsion composition comprising water, a protein, and an oil and/or fat, wherein
an amount of the oil and/or fat is 50 mass% or more when a total amount of water, the protein, and the oil and/or fat in the oil and/or fat emulsion composition is 100 mass%,
a compressive load of the oil and/or fat emulsion composition measured at 25°C is 2.0 N or more, and
50 mass% or more in a protein material related to the protein is derived from a plant protein material having all characteristics of a) to c) below:
a) a protein content in a solid content is 70 mass% or more,
b) an NSI is 80 or more, and
c) an area ratio of 2000 Da or more and less than 20000 Da is 30% or more and an area ratio of 20000 Da or more is 70% or less in a measurement result of molecular weight distribution.

2. The oil and/or fat emulsion composition according to claim 1, wherein the plant protein material has an area ratio of 2000 Da or more and less than 20000 Da of 45 to 90% in the measurement result of molecular weight distribution.

3. The oil and/or fat emulsion composition according to claim 2, wherein an area ratio of less than 2000 Da is 45% or less in the measurement result of molecular weight distribution.

4. The oil and/or fat emulsion composition according to any one of claims 1 to 3, wherein the compressive load is 4.0 N or more.

5. The oil and/or fat emulsion composition according to any one of claims 1 to 3, wherein the amount of the oil and/or fat is 75% or more when the total amount of water, the protein, and the oil and/or fat in the oil and/or fat emulsion composition is 100 mass%.

6. The oil and/or fat emulsion composition according to any one of claims 1 to 3, wherein the plant protein material is derived from a legume.

7. The oil and/or fat emulsion composition according to any one of claims 1 to 3, comprising no animal protein.

8. The oil and/or fat emulsion composition according to any one of claims 1 to 3, wherein
the compressive load is 4.0 N or more,
the amount of the oil and/or fat is 75% or more when the total amount of water, the protein, and the oil and/or fat in the oil and/or fat emulsion composition is 100 mass%,
the plant protein material is derived from a legume, and
the oil and/or fat emulsion composition comprises no animal protein.

9. A solid fat substitute oil and/or fat composition produced by drying the oil and/or fat emulsion composition described in any one of claims 1 to 3.

10. A solid fat substitute oil and/or fat composition produced by drying the oil and/or fat emulsion composition described in claim 4.

11. A solid fat substitute oil and/or fat composition produced by drying the oil and/or fat emulsion composition described in claim 5.

12. A solid fat substitute oil and/or fat composition produced by drying the oil and/or fat emulsion composition described in claim 6.

13. A solid fat substitute oil and/or fat composition produced by drying the oil and/or fat emulsion composition described in claim 7.

14. A solid fat substitute oil and/or fat composition produced by drying the oil and/or fat emulsion composition described in claim 8.
